# FASCICULE DE BREVET EUROPEEN

(11) **EP 1 996 464 B1**
(45) Date de publication et mention de la délivrance du brevet: **12.05.2010**
(21) Numéro de dépôt: 07731141.3
(22) Date de dépôt: 15.03.2007
(51) Int. Cl.: B64D 27/02

(54) **AERONEF A IMPACT ENVIRONNEMENTAL REDUIT**
FLUGZEUG MIT VERMINDERTEM LÄRMPEGEL
AIRCRAFT HAVING REDUCED ENVIRONMENTAL IMPACT

(30) Priorité: 20.03.2006 FR 0602405
(43) Date de publication de la demande: 03.12.2008
(73) Titulaire: AIRBUS OPERATIONS (SAS), 31060 Toulouse (FR)
(72) Inventeur: GALL, Pierre-Emmanuel, F-31000 Toulouse (FR); CROS, Christophe, F-31240 L'Union (FR)
(74) Mandataire: Bonnetat, Christian
(86) Numéro de dépôt international: PCT/FR2007/000447
(87) Numéro de publication internationale: WO 2007/107647

(56) Documents cités:
- FR-A- 2 873 096
- US-A- 3 652 035
- STEINKE S: "AUS DER TRICKKISTE DER FLUGZEUGENTWICKLER AIRBUS-KONZEPTE FUER UEBERMORGEN" FLUG REVUE, STUTTGART, DE, vol. 1/2001, janvier 2001 (2001-01), pages 22-25, XP009053625

## Description

La présente invention concerne un aéronef à impact environnemental réduit.

On connaît dans le domaine de l'aéronautique des aéronefs à moteur monté à l'arrière du fuselage afin d'en réduire l'impact sonore. Un tel exemple est illustré par le document FR-A-2 873 096.

De plus, dans la demande internationale WO2007/051914, ayant comme priorité la demande de brevet français n° 05 11176, déposée le 3 novembre 2005 au nom de la demanderesse, on a décrit un aéronef peu gourmand en combustible et peu polluant, dont l'émission de bruit vers le sol, notamment lors de décollages et d'atterrissages, est faible. Un tel aéronef comporte au moins un moteur à hélice(s), de préférence non carénée(s), monté à l'arrière de l'aéronef, sur le dos de celui-ci, avec son axe au moins sensiblement parallèle à l'axe longitudinal dudit aéronef. Un tel moteur peut, par exemple, être un turbopropulseur à hélice unique ou bien un propfan à hélices contrarotatives. De plus, la cellule dudit aéronef, dont la partie arrière comporte un empennage horizontal et deux empennages verticaux, respectivement disposés aux extrémités dudit empennage horizontal, est telle que ladite partie arrière forme barrière pour le bruit engendré vers le bas et vers les côtés par ledit moteur, ladite ou lesdites hélice(s) étant disposée(s) à l'aplomb de ladite partie arrière.

Une telle barrière antibruit, formée par ladite partie arrière de la cellule, est particulièrement efficace du fait que le bruit d'une hélice est très directif, le maximum du bruit étant perçu au voisinage du plan de l'hélice et le bruit diminuant fortement lorsque l'on s'éloigne de ce plan.

Par ailleurs, dans cet aéronef, ladite (ou lesdites) hélice(s) est(sont) de préférence disposée(s) à l'arrière dudit moteur et est(sont) apte(s) à exercer une poussée sur ledit aéronef. Ainsi, l'hélice ou les hélices se trouve(nt) à un emplacement de section réduite du fuselage de l'aéronef, ce qui ménage plus de place pour son (leur) installation. De plus, la (ou les hélices) est(sont) ainsi éloignée(s) de la cabine des passagers, ce qui est bénéfique pour le confort de ces derniers.

Ainsi, de telles dispositions, il pourrait résulter que, en cas de rupture non contenue d'une partie tournante de la (ou des) turbomachines(s) et/ou rupture d'une partie de la (ou des) hélice(s), des débris de celles-ci endommagent, et même détruisent, l'empennage horizontal (et notamment le caisson d'empennage qui le supporte et qui se trouve à la partie arrière de la cellule), ainsi que les empennages verticaux, entraînant la perte de l'aéronef.

Bien entendu, pour remédier à un tel inconvénient, on pourrait envisager de doubler, renforcer et/ou protéger la structure de ladite partie arrière de la cellule, mais de telles mesures augmenteraient la masse et les coûts de l'aéronef, tout en en dégradant les performances.

Aussi, l'objet de la présente invention est-il de perfectionner l'aéronef décrit ci-dessus, à moindres coûts, sans augmentation de masse et sans diminution de l'efficacité de la barrière antibruit que forme la partie arrière de sa cellule.

A cette fin, selon l'invention, l'aéronef à impact environnemental réduit présente les caractéristiques de la revendication 1.

Ainsi, grâce à la présente invention, on avance le ou les moteurs sur ladite partie arrière de la cellule de façon que, en cas d'éclatement, leurs débris et ceux de la ou des hélice(s) ne puissent détériorer de manière excessive les fonctionnalités des empennages horizontal et verticaux. Par ailleurs, la barrière antibruit formée par cette partie arrière de la cellule ne subit pas de baisse de performances du fait de l'avancement du ou des moteur(s), puisque l'empennage horizontal est maintenant dirigé vers l'avant grâce à sa flèche inverse, ce qui, par ailleurs, fait avancer les empennages verticaux. En ce qui concerne la barrière antibruit, l'avancement du ou des moteur(s) est donc compensé par l'orientation vers l'avant de l'empennage horizontal, dont l'emplanture peut être disposée au même emplacement que celui de l'empennage horizontal de l'aéronef antérieur, décrit ci-dessus.

Bien entendu, dans cet aéronef antérieur aussi bien que dans l'aéronef de la présente invention, chaque moteur est monté sur le dos de l'aéronef par l'intermédiaire d'un système de fixation, par exemple du type mât ou analogue.

Selon une autre particularité importante de la présente invention, un tel système de fixation est également disposé en avant de la partie centrale dudit caisson d'empennage.

Ainsi, ledit caisson d'empennage est totalement indépendant dudit système de fixation, de sorte que ledit empennage horizontal peut être du type réglable en inclinaison, généralement appelé PHR (Plan Horizontal Reglable) ou THS (Trimmable Horizontal Stabilizer).

Dans un mode de réalisation avantageux de la présente invention, ladite partie arrière de la cellule et ladite flèche inverse sont prévues pour faire barrière, de part et d'autre du plan de la ou des hélices, à la totalité de la partie du bruit ayant une intensité sonore supérieure à une fraction prédéterminée de l'intensité maximale émise par ledit moteur. Par exemple, l'intensité sonore masquée par ladite partie arrière de la cellule, d'un côté et de l'autre dudit plan, est égale à au moins approximativement -5dB par rapport à ladite intensité maximale.

Une telle partie de bruit forme, de façon connue, une zone de bruit axée sur l'axe du moteur et délimitée, transversalement à cet axe, par un front avant et un front arrière. Il est alors avantageux que le bord d'attaque en flèche inverse dudit empennage horizontal suive au moins approximativement ledit front avant de ladite zone de bruit. Ainsi, il est possible de rendre maximal le potentiel de masquage du bruit pour une position relative donnée dudit moteur à hélice(s) par rapport à l'emplanture de l'empennage horizontal à flèche inverse.

L'expérience a montré que les flèches inverses dudit empennage horizontal et dudit bord d'attaque pouvaient être avantageusement de l'ordre d'une vingtaine et d'une quinzaine de degrés, respectivement.

Bien entendu, l'aéronef conforme à la présente invention peut être monomoteur et ne comporter qu'un seul moteur à hélice(s) monté à l'arrière de la façon décrite ci-dessus. Cependant, en plus de ce dernier moteur, il peut comporter en outre au moins deux turbomoteurs portés symétriquement par les ailes dudit aéronef. Un tel agencement est avantageux dans ce sens que le moteur arrière à hélice(s), peu gourmand en combustible et peu bruyant du fait du masque antibruit formé par la partie arrière de la cellule, permet de réduire la puissance (et donc le bruit et la consommation en combustible) des turbomoteurs d'ailes.

Cependant, dans un mode de réalisation préféré de l'aéronef conforme à la présente invention, on prévoit deux moteurs à hélice(s) disposés l'un à côté de l'autre à l'arrière de l'aéronef, avec leurs axes parallèles.
Les figures du dessin annexé feront bien comprendre comment l'invention peut être réalisée. Sur ces figures, des références identiques désignent des éléments semblables.
Les figures 1 et 2 illustrent schématiquement un premier mode de réalisation de l'aéronef conforme à la présente invention, respectivement en vue latérale et en vue de l'avant.
La figure 3 est une vue de dessus schématique, à plus grande échelle, de la partie arrière de l'aéronef des figures 1 et 2.
Les figures 4 et 5 sont des vues de dessus schématiques correspondant à la figure 3 et illustrant respectivement la protection de l'empennage contre un éclatement du moteur ou des hélices et le masquage du bruit du moteur à hélices.
Les figures 6 et 7 illustrent schématiquement un mode de réalisation préféré de l'aéronef conforme à la présente invention, respectivement en vue de l'avant et en vue partielle agrandie de dessus.

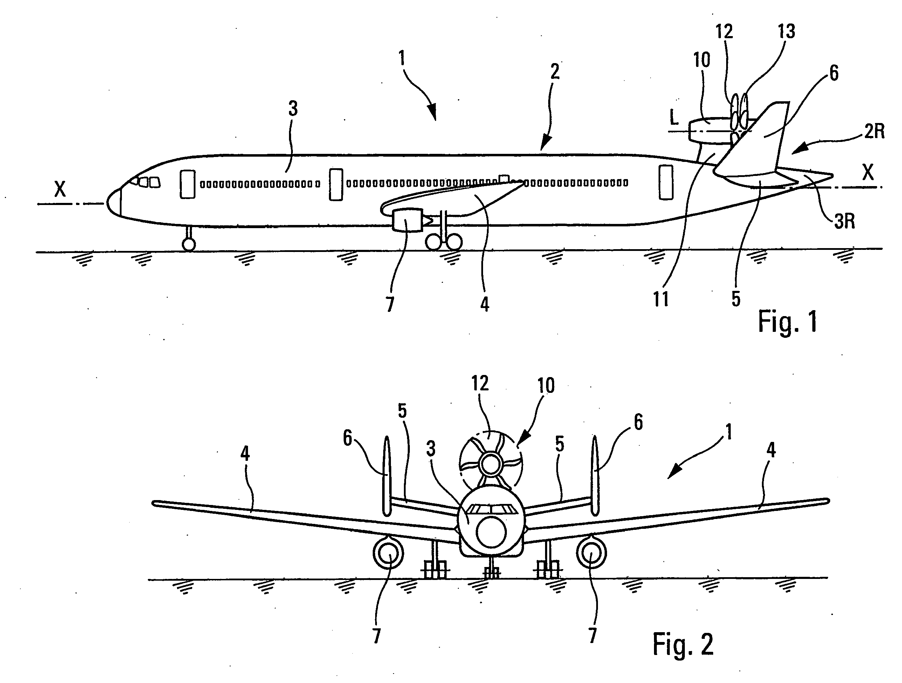

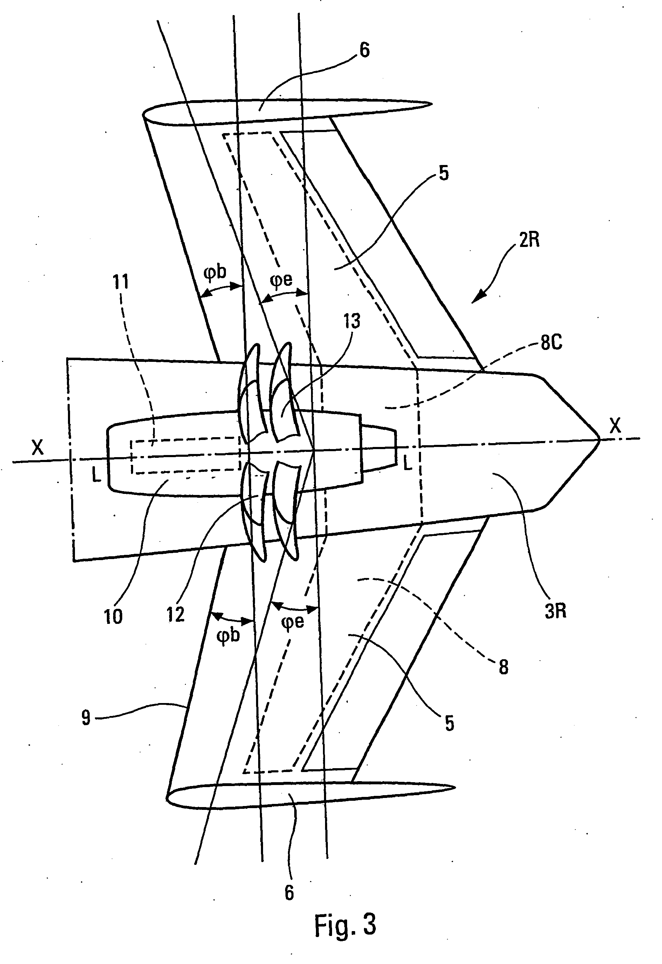

L'avion commercial 1, conforme à l'invention et représenté schématiquement sur les figures 1 à 3, présente un axe longitudinal X-X et comporte une cellule 2, qui est constituée d'un fuselage 3, d'ailes 4, d'un empennage horizontal 5 et de deux empennages verticaux 6. Les ailes 4 portent chacune un turbomoteur 7 et les empennages verticaux 6 sont disposés aux extrémités de l'empennage horizontal 5.

Cet empennage horizontal 5 est du type connu PHR (ou THS) à inclinaison variable et il est supporté par un caisson d'empennage 8, dont la partie centrale 8C est logée à l'intérieur de la partie arrière 3R du fuselage 3. De plus, l'empennage horizontal 5 présente une flèche inverse de valeur ϕe. De même, le bord d'attaque 9 de l'empennage horizontal 5 présente une flèche inverse de valeur ϕb.

A la partie arrière 2R de la cellule 2 -partie arrière 2R qui comporte la partie arrière 3R du fuselage 3, l'empennage horizontal 5 et les empennages verticaux 6- est monté un moteur à hélices 10, disposé sur le dos de ladite partie arrière 3R du fuselage 3 avec son axe L-L, parallèle à l'axe longitudinal X-X de l'avion 1 et disposé dans un même plan vertical. Le moteur 10 est porté par un pylône 11 ou analogue disposé en avant de la partie centrale 8C du caisson d'empennage 8. A son arrière; le moteur 10 comporte deux hélices contrarotatives 12 et 13, non carénées, disposées à l'aplomb dudit empennage horizontal 5.

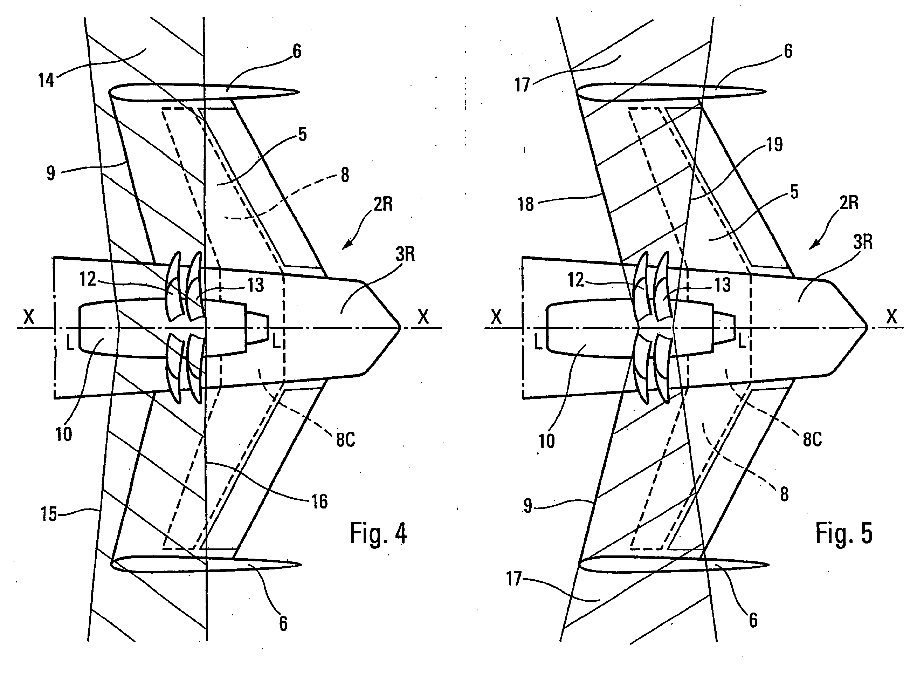

Si, alors que le moteur 10 fonctionne et que les hélices 12 et 13 tournent, il se produisait un éclatement, les débris dudit moteur et/ou desdites hélices suivraient des trajectoires comprises dans une zone d'éclatement 14 axée sur l'axe L-L dudit moteur et délimitée, transversalement audit axe, par un front avant 15 et un front arrière 16 (voir la figure 4).

Comme le montre la figure 4, le moteur 10 est monté à la partie arrière 2R de la cellule 2, de façon que ledit front arrière 16 de la zone d'éclatement 14 se trouve en avant de la partie centrale 8C du caisson d'empennage 8.

Ainsi, en cas d'éclatement du moteur 10 et/ou des hélices 12, 13, le caisson d'empennage ne serait pas totalement endommagé, seule une partie des empennages 5 et 6 risquant de l'être.

De plus, en fonctionnement, chacune desdites hélices 12 et 13 engendre un bruit dont l'intensité sonore est maximale au voisinage de son plan et qui décrit rapidement lorsqu'on s'en écarte le long de l'axe L-L. Dans le cas présent, les hélices 12 et 13 engendrent, autour desdits axes L-L, un bruit global dont l'intensité sonore maximale est une surface sensiblement plane passant entre les hélices 12 et 13. Sur la figure 5, on a représenté une zone de bruit 17 axée sur l'axe L-L du moteur 10 et délimitée, transversalement à ce dernier axe, par un front avant 18 et par un front arrière 19, l'intensité sonore dans cette zone de bruit 17 étant par exemple égale à -5dB par rapport à ladite intensité sonore maximale (voir la figure 5).

Comme on peut le voir sur la figure 5, la disposition relative des hélices 12, 13, de l'empennage horizontal 5 et des empennages verticaux 6 est telle que, au voisinage dudit moteur 10, ladite zone de bruit 17 se trouve à l'intérieur du canal formé par lesdits empennages horizontal 5 et verticaux 6. Dans la disposition représentée sur la figure 5, le bord d'attaque 9 de l'empennage horizontal 5 se trouve au moins approximativement dans le front avant 18 de la zone de bruit 17.

Ainsi, le bruit émis par le moteur 10 est masqué, vers le bas, par l'empennage horizontal 5 et, partiellement latéralement, par les empennages verticaux 6.

Par suite, lors de décollages et d'atterrissages, le bruit émis par le moteur 10 de l'avion 1 en direction du sol est fortement réduit, puisque masqué par l'empennage horizontal 5 et, partiellement, par les empennages verticaux 6.

On remarquera que, par rapport à un avion biturbomoteur usuel de mêmes performances, l'avion 1 peut utiliser des turbomoteurs 7 moins puissants (et donc moins bruyants) du fait de la présence du moteur 10 à l'arrière. Globalement, l'avion 1 peut donc être moins bruyant et consommer moins de combustible qu'un tel avion biturbomoteur.

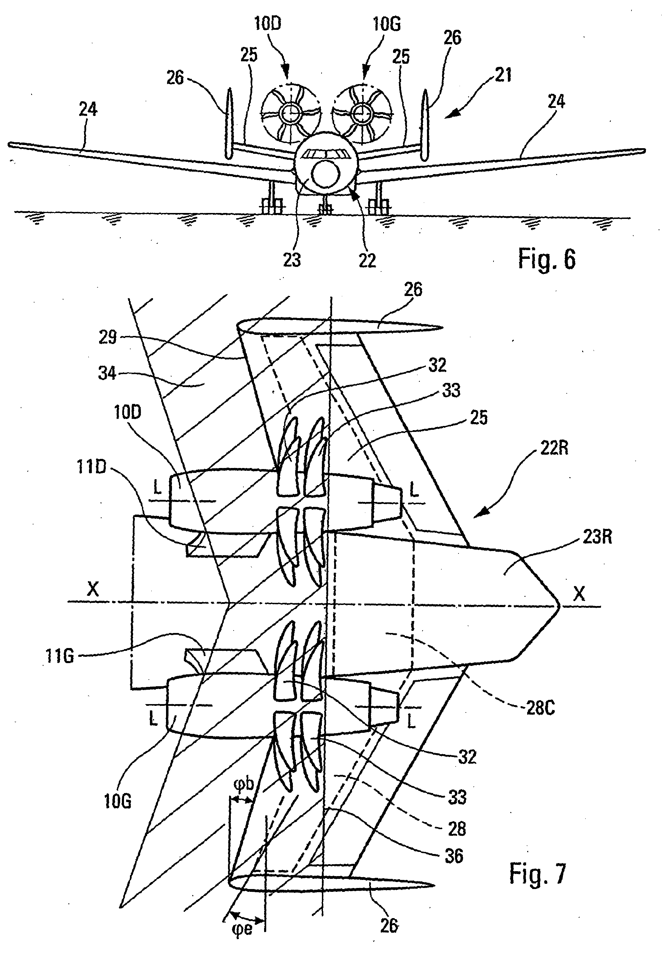

L'avion commercial 21, conforme à la présente invention et représenté schématiquement par les figures 6 et 7, présente également un axe longitudinal X-X et comporte une cellule 22, constituée d'un fuselage 23, d'ailes 24, d'un empennage horizontal 25 et de deux empennages verticaux 26 disposés aux extrémités de l'empennage horizontal 25. Aucun turbomoteur n'est porté par les ailes 24.

Tout comme l'empennage horizontal 5, l'empennage horizontal 25 est du type PHR (THS) et il est supporté par un caisson d'empennage 28, dont la partie centrale 28C est logée à l'intérieur de la partie arrière 23R du fuselage 23. L'empennage horizontal 25 et son bord d'attaque 29 présentent des flèches inverses respectives ϕe et ϕb.

A la partie arrière 22R de la cellule 22 -partie arrière 22R qui comporte la partie arrière 23R du fuselage 23, l'empennage horizontal 25 et les empennages verticaux 26- sont montés systématiquement deux moteurs à hélices 10G et 10D, disposés l'un à côté de l'autre sur le dos de ladite partie arrière 23R du fuselage 23 avec leurs axes L-L, parallèles à l'axe longitudinal X-X de l'avion 21. Les moteurs 10G et 10D sont portés respectivement par des pylônes 11G et 11D ou analogues disposés en avant de la partie centrale 28C du caisson d'empennage 28. Du côté arrière, les moteurs 10G et 10D comportent deux hélices contrarotatives 32 et 33, non carénées, disposées à l'aplomb dudit empennage horizontal 25.

De façon semblable à ce qui a été décrit ci-dessus à propos de l'avion 1 :
- les moteurs 10G et 10D sont montés sur la partie arrière 22R de la cellule 22, de façon que le front arrière 36 de la zone d'éclatement globale 34 prenant en compte ces deux moteurs se trouve en avant de la partie centrale 28C du caisson d'empennage 28 (tout comme le front arrière 16 de la zone d'éclatement 14 se trouve en avant de la partie centrale 8C du caisson d'empennage 8) ;
- la partie arrière 22R de la cellule 22 et la flèche inverse ϕe de l'empennage horizontal 25 sont prévues pour faire barrière, de part et d'autre du plan des hélices 32, 33, à la totalité de la partie du bruit global des moteurs 10G et 10D ayant une intensité sonore supérieure à une fraction prédéterminée de l'intensité maximale émise par lesdits moteurs ;
- l'intensité sonore masquée par ladite partie arrière de la cellule, d'un côté et de l'autre du plan des hélices, est égale à au moins approximativement -5dB par rapport à l'intensité maximale ; et
- le bord d'attaque en flèche inverse 29 dudit empennage horizontal 25 suit au moins approximativement ledit front avant de la zone de bruit global des moteurs 10G et 10D.

Notamment dans l'exemple de réalisation des figures 6 et 7, il s'est avéré avantageux que la flèche ϕe de l'empennage horizontal 25 soit de l'ordre de 20 degrés, alors que la flèche ϕb du bord d'attaque 29 était de l'ordre de 15 degrés.

## Revendications

1. Aéronef à impact environnemental réduit, présentant un axe longitudinal (X-X) et comportant :
- au moins un moteur (10 ; 10G, 10D) qui comporte au moins une hélice (12, 13 ; 32, 33), disposée à l'arrière dudit moteur et apte à exercer une poussée sur ledit aéronef, et qui est monté à l'arrière dudit aéronef, sur le dos de celui-ci, l'axe (L-L) dudit moteur étant au moins sensiblement parallèle audit axe longitudinal (X-X) de l'aéronef, ledit moteur et ladite hélice étant tels que, en cas d'éclatement, leurs débris suivraient des trajectoires comprises dans une zone d'éclatement (14), axée sur ledit axe (L-L) du moteur et délimitée, transversalement à ce dernier axe (L-L), par un front avant (15) et par un front arrière (16) ; et
- une cellule (2 ; 22), dont la partie arrière (2R ; 22R) comporte un empennage horizontal (5 ; 25) et deux empennages verticaux (6 ; 26), respectivement disposés aux extrémités dudit empennage horizontal, ladite partie arrière de cellule comportant un caisson d'empennage (8 ; 28) supportant ledit empennage horizontal et ladite hélice étant disposée à l'aplomb de ladite partie arrière de cellule de façon que celle-ci forme une barrière antibruit au moins pour le bruit engendré vers le bas dudit moteur,
ledit aéronef comportant en outre les caractéristiques suivantes:
- ledit empennage horizontal (5 ; 25) présente une flèche inverse (ϕe), de sorte que ledit empennage horizontal (5 ;25) et lesdits empennages verticaux (6 ;26) se trouvent avancés par rapport à la partie centrale (8C ;28C) dudit caisson d'empennage (8 ;28) ; et
- ledit moteur (10 ; 10G, 10D) est monté sur ladite partie arrière (2R ; 22R) de la cellule, de façon que ladite hélice (12,13 ;32,33) et ledit front arrière (16 ; 36) de la zone d'éclatement (14 ; 34) se trouvent en avant de ladite partie centrale (8C ; 28C) dudit caisson d'empennage (8 ; 28).

2. Aéronef selon la revendication 1,
**caractérisé en ce que** le système de fixation (11 ; 11G, 11D) du moteur sur ladite partie arrière de la cellule est également disposé en avant de la partie centrale (8C ; 28C) dudit caisson d'empennage (8 ; 28).

3. Aéronef selon la revendication 2,
**caractérisé en ce que** ledit empennage horizontal (5 ; 25) à flèche inverse est réglable en inclinaison.

4. Aéronef selon l'une des revendications 1 à 3,
**caractérisé en ce que** ladite partie arrière de la cellule et ladite flèche inverse de l'empennage horizontal sont prévues pour faire barrière, de part et d'autre du plan de l'hélice, à la totalité de la partie du bruit ayant une intensité sonore supérieure à une fraction prédéterminée de l'intensité maximale émise par ledit moteur.

5. Aéronef selon la revendication 4,
**caractérisé en ce que** l'intensité sonore masquée par ladite partie arrière de la cellule, d'un côté et de l'autre du plan d'hélice, est égale à au moins approximativement -5dB par rapport à ladite intensité maximale.

6. Aéronef selon l'une des revendications 4 ou 5, dans lequel ladite partie de bruit forme une zone de bruit (17) axée sur ledit axe (L-L) dudit moteur et délimitée, transversalement à cet axe (L-L), par un front avant (18) et un front arrière (19),
**caractérisé en ce que** le bord d'attaque en flèche inverse (9 ; 29) dudit empennage horizontal suit au moins approximativement ledit front avant (18) de ladite zone de bruit (17).

7. Aéronef selon l'une quelconque des revendications 1 à 6,
**caractérisé en ce que** la flèche inverse (ϕe) dudit empennage horizontal est d'une vingtaine de degrés.

8. Aéronef selon l'une des revendications 6 ou 7,
**caractérisé en ce que** la flèche inverse (ϕb) dudit bord d'attaque (9 ; 29) de l'empennage horizontal est d'une quinzaine de degrés.

9. Aéronef selon l'une des revendications 1 à 8,
**caractérisé en ce qu'**il comporte un unique tel moteur à hélice(s) (10) monté à l'arrière et au moins deux turbomoteurs (7) portés symétriquement par les ailes (4) dudit aéronef.

10. Aéronef selon l'une des revendications 1 à 8,
**caractérisé en ce qu'**il comporte deux tels moteurs à hélice(s) (10G, 10D) montés à l'arrière de l'aéronef, sur le dos de celui-ci et disposés l'un à côté de l'autre, avec leurs axes parallèles.

## Claims

1. Aircraft of reduced environmental impact, having a longitudinal axis (X-X) and comprising:
- at least one engine (10; 10G, 10D) which comprises at least one propeller (12, 13; 32, 33) positioned behind said engine and able to exert thrust on said aircraft and which is mounted at the rear of said aircraft, on the back thereof, the axis (L-L) of said engine being at least substantially parallel to said longitudinal axis (X-X) of the aircraft, said engine and said propeller being such that, should they shatter, their debris would follow paths contained in a shatter region (14) aligned with said axis (L-L) of the engine and delimited, transversely to the latter axis (L-L), by a front boundary (15) and by a rear boundary (16); and
- a cell (2; 22) the rear part (2R; 22R) of which comprises a horizontal tail plane (5; 25) and two vertical tail planes (6; 26) positioned one at each end of said horizontal tail plane, said rear part of the cell comprising a tail box (8; 28) supporting said horizontal tail plane and said propeller being positioned vertically in line with said rear part of the cell so that the latter forms an anti-noise barrier at least in respect of the downwardly directed engine noise,
said aircraft further comprising the following features:
- said horizontal tail plane (5; 25) is swept forward (at an angle ϕe) so that said horizontal tail plane (5;25) and said vertical tail planes (6;26) are moved forward with respect to the central part (8C; 28C) of said tail box (8;28); and
- said engine (10; 10G, 10D) is mounted on said rear part (2R; 22R) of the cell in such a way that said rear boundary (16; 36) of the shatter region (14; 34) is located forward of said central part (8C; 28C) of said tail box (8; 28).

2. Aircraft according to claim 1,
**characterized in that** the fixing system (11; 11G, 11D) for attaching the engine to said rear part of the cell is also positioned forward of the central part (8C; 28C) of said tail box (8; 28).

3. Aircraft according to claim 2,
**characterized in that** the angle of inclination of said forward-swept horizontal tail plane (5; 25) is adjustable.

4. Aircraft according to any one of claims 1 to 3,
**characterized in that** said rear part of the cell and said forward sweep of the horizontal tail plane are designed to act as a barrier, on each side of the plane of the propeller, to all of that proportion of the noise that has an acoustic intensity higher than a predetermined fraction of the maximum intensity emitted by said engine.

5. Aircraft according to claim 4,
**characterized in that** the acoustic intensity shrouded by said rear part of the cell on each side of the plane of the propeller is equal to at least approximately - 5dB with respect to said maximum intensity.

6. Aircraft according to any one of claims 4 or 5, in which the said proportion of the noise forms a noise zone (17) aligned with said axis (L-L) of said engine and delimited, transversely to this axis (L-L), by a front boundary (18) and a rear boundary (19),
**characterized in that** the forward-swept leading edge (9; 29) of said horizontal tail plane at least approximately follows the line of said front boundary (18) of said noise zone (17).

7. Aircraft according to any one of claims 1 to 6,
**characterized in that** the angle (ϕe) at which said horizontal tail plane is swept forward is around twenty degrees.

8. Aircraft according to either of claims 6 or 7,
**characterized in that** the angle (ϕb) at which said leading edge (9; 29) of the horizontal tail plane is swept forward is around fifteen degrees.

9. Aircraft according to any one of claims 1 to 8,
**characterized in that** it comprises a single propeller engine (10) mounted at the rear and at least two turboshaft engines (7) borne symmetrically by the wings (4) of said aircraft.

10. Aircraft according to any one of claims 1 to 8,
**characterized in that** it comprises at least two such propeller engines (10G, 10D) mounted at the rear of the aircraft, on the back thereof and positioned one beside the other with their axes parallel.

## Patentansprüche

1. Luftfahrzeug mit reduzierten Umweltauswirkungen, das eine Längsachse (X-X) aufweist und folgendes umfasst:
- mindestens einen Motor (10; 10G, 10D), der mindestens einen Propeller (12, 13; 32, 33) umfasst, der hinten am Motor angeordnet ist und dazu geeignet ist, einen Schub auf das Luftfahrzeug auszuüben, und der hinten auf dem Rücken des Luftfahrzeugs angebracht ist, wobei die Achse (L-L) des Motors mindestens im Wesentlichen parallel zu der Längsachse (X-X) des Luftfahrzeugs ist, wobei der Motor und der Propeller derart gestaltet sind, dass falls es zum Bersten kommt, ihre Trümmer Flugbahnen folgen würden, die in einem Berstbereich (14) liegen, der auf die Achse (L-L) des Motors ausgerichtet und quer zu dieser Achse (L-L) durch eine Vorderfront (15) und eine Hinterfront (16) begrenzt ist; und
- eine Zelle (2; 22), deren hinterer Teil (2R; 22R) eine waagerechte Leitflosse (5; 25) und zwei senkrechte Leitflossen (6; 26), die jeweils an den Enden der waagerechten Leitflosse angeordnet sind, umfasst, wobei der hintere Teil der Zelle einen Leitwerkkasten (8; 28) umfasst, der die waagerechte Leitflosse trägt, und der Propeller derart lotrecht zu dem hinteren Teil der Zelle angeordnet ist, dass diese eine Lärmbarriere mindestens für den Lärm bildet, der von dem Motor nach unten verursacht wird,
wobei das Luftfahrzeug ferner die folgenden Kennzeichen umfasst:
- die waagerechte Leitflosse (5; 25) weist eine negative Pfeilstellung (ϕe) auf, so dass die waagerechte Leitflosse (5; 25) und die senkrechten Leitflossen (6; 26) im Verhältnis zum mittleren Teil (8C; 28C) des Leitwerkkastens (8; 28) vorgerückt sind; und
- der Motor (10; 10G, 10D) auf dem hinteren Teil (2R; 22R) der Zelle angebracht ist, so dass der Propeller (12, 13; 32, 33) und die Vorderfront (16; 36) des Berstbereichs (14; 34) sich vor dem mittleren Teil (8C; 28C) des Leitwerkkastens (8; 28) befinden.

2. Luftfahrzeug nach Anspruch 1, **dadurch gekennzeichnet, dass** das Befestigungssystem (11; 11G, 11D) des Motors auf dem hinteren Teil der Zelle ebenfalls vor dem mittleren Teil (8C; 28C) des Leitwerkkastens (8; 28) angeordnet ist.

3. Luftfahrzeug nach Anspruch 2, **dadurch gekennzeichnet, dass** die waagerechte Leitflosse (5; 25) mit negativer Pfeilstellung in der Neigung verstellbar ist.

4. Luftfahrzeug nach einem der Ansprüche 1 bis 3, **dadurch gekennzeichnet, dass** der hintere Teil der Zelle und die negative Pfeilstellung der waagerechten Leitflosse dazu gedacht sind, um auf beiden Seiten der Ebene des Propellers eine Barriere für den gesamten Lärmanteil zu bilden, der eine Lautstärke aufweist, die größer ist als ein vorherbestimmter Bruchteil der Höchstlautstärke, die von dem Motor abgegeben wird.

5. Luftfahrzeug nach Anspruch 4, **dadurch gekennzeichnet, dass** die Lautstärke, die von dem hinteren Teil der Zelle auf beiden Seiten der Propellerebene maskiert wird, mindestens gleich ungefähr -5 dB im Verhältnis zu der Höchstlautstärke ist.

6. Luftfahrzeug nach einem der Ansprüche 4 oder 5, wobei der Lärmanteil einen Lärmbereich (17) bildet, der auf die Achse (L-L) des Motors ausgerichtet und quer zu dieser Achse (L-L) von einer Vorderfront (18) und einer Hinterfront (19) begrenzt ist,
**dadurch gekennzeichnet, dass** die Vorderkante mit negativer Pfeilstellung (9; 29) der waagerechten Leitflosse mindestens ungefähr der Vorderfront (18) des Lärmbereichs (17) folgt.

7. Luftfahrzeug nach einem der Ansprüche 1 bis 6, **dadurch gekennzeichnet, dass** die negative Pfeilstellung (ϕe) der waagerechten Leitflosse etwa zwanzig Grad beträgt.

8. Luftfahrzeug nach einem der Ansprüche 6 oder 7, **dadurch gekennzeichnet, dass** die negative Pfeilstellung (ϕb) der Vorderkante (9; 29) der waagerechten Leitflosse etwa fünfzehn Grad beträgt.

9. Luftfahrzeug nach einem der Ansprüche 1 bis 8, **dadurch gekennzeichnet, dass** es einen einzigen derartigen Motor mit Propeller(n) (10), der hinten angebracht ist, und mindestens zwei Turbomotoren (7), die symmetrisch von den Flügeln (4) des Luftfahrzeugs getragen werden, umfasst.

10. Luftfahrzeug nach einem der Ansprüche 1 bis 8, **dadurch gekennzeichnet, dass** es zwei derartige Motoren mit Propeller(n) (10G, 10D), die hinten auf dem Rücken des Luftfahrzeugs angebracht und nebeneinander angeordnet sind, umfasst, wobei ihre Achsen parallel sind.
